# EUROPÄISCHE PATENTSCHRIFT

(11) **EP 2 881 548 B1**
(45) Veröffentlichungstag und Bekanntmachung des Hinweises auf die Patenterteilung: **15.08.2018**
(21) Anmeldenummer: 13196267.2
(22) Anmeldetag: 09.12.2013
(51) Int. Cl.: F04D 29/54, F04D 29/56, F02C 9/18, F02C 6/08, F01D 17/16

(54) **Gasturbinenverdichter**
Gas turbine compressor
Compresseur de turbine à gaz

(43) Veröffentlichungstag der Anmeldung: 10.06.2015
(73) Patentinhaber: MTU Aero Engines AG, 80995 München (DE)
(72) Erfinder: Lahmer, Manfred, 82223 Eichenau (DE); Sahota, Harsimar, 85748 Garching (DE)

(56) Entgegenhaltungen:
- EP-A1- 2 055 961
- EP-A2- 1 801 403
- EP-A2- 2 518 273
- WO-A1-2012/164224
- GB-A- 2 445 863
- US-A- 4 395 195

## Beschreibung

Die Erfindung betrifft eine Gasturbine nach dem Oberbegriff des Anspruchs 1.

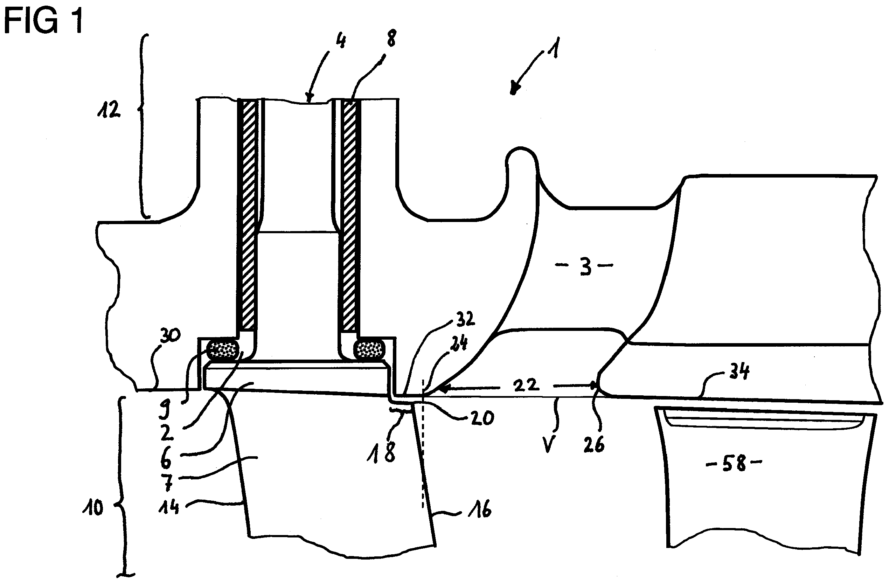

Solche bekannte Gasturbinen sind bspw. in der Figur 1 abgebildet. Die Figur 1 zeigt eine Schnittansicht einer Gasturbine des äußeren Gaspfades. Die Gasturbine weist ein Gehäuse 1 auf mit einer Bohrung 2 und einem Zapfkanal 3. Dieses im Wesentlichen horizontal verlaufende Gehäuse 1 trennt den unteren Bereich (Hauptgaspfad 10) vom oberen Bereich (Nebengaspfad 12). Das Arbeitsfluid (hier Gas) strömt in dieser Darstellung von links nach rechts. Eine Verstellleitschaufel 4 weist einen Drehzapfen 5, einen Drehteller 6 und ein Leitschaufelblatt 7 auf. Der Drehzapfen 5 ist in der Bohrung 2 angeordnet und wird durch eine in der Bohrung 2 angeordnete Führungsbuchse 8 gehalten. Zwischen der Bohrung 2 und dem Drehteller 6 ist ein Dichtring 9 angebracht. Der Leitschaufelblatt 7 weist eine Vorderkante 14 und eine Hinterkante 16 nach dem Stand der Technik auf. Die Vorderkante 14 ragt meist nicht über den Drehteller 6 hinaus. Im Gegensatz dazu ragt die Hinterkante 16 über den Drehteller 6, so dass eine kurze Fahne 18 entsteht. Der Punkt an dem sich die Fahne 18 und die Hinterkante 16 treffen wird als Fahneneck 20 bezeichnet. In Strömungsrichtung betrachtet ist eine Einlassöffnung 22 des Zapfkanals 3 nach dieser bekannten Hinterkante 16 des Leitschaufelblattes 7 angeordnet. Dies bedeutet, dass im Stand der Technik der Anfang 24 der Einlassöffnung 22 hinter dem Fahneneck 20 angeordnet ist. Dabei ist es unerheblich, ob der Überhang über dem Drehteller 6 klein ist oder ob der Anfang 24 der Einlassöffnung 22 in Strömungsrichtung betrachtet weiter unten angeordnet ist.

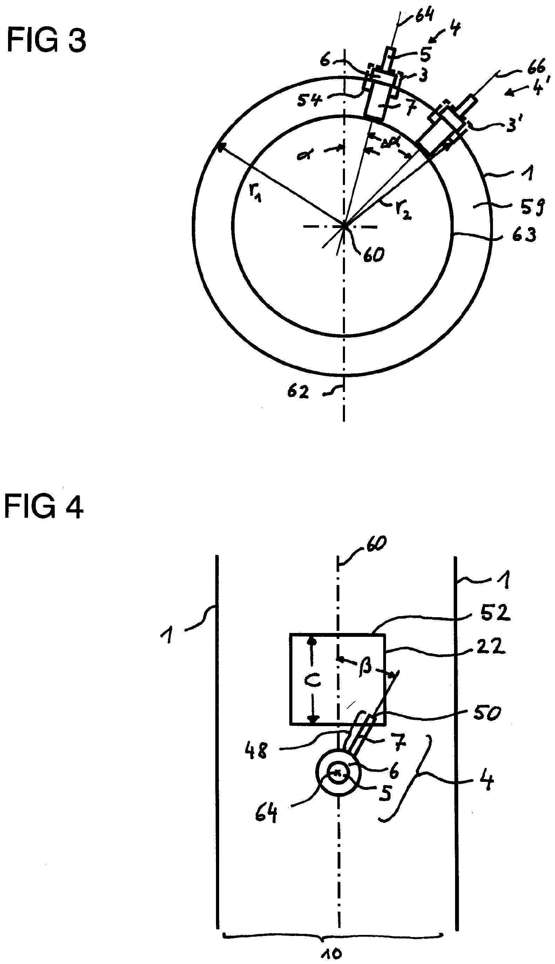

Vor der Bohrung 2 ist eine erste Außenfläche 30 des Ringsraums zu sehen. Die erste Außenfläche 30 ist in einem ersten Radius r₁ zur Hauptwelle 60 (siehe Figur 3) der Gasturbine angeordnet. Zwischen der Bohrung 2 und der Einlassöffnung 22 des Zapfkanales 3 ist eine zweite Außenfläche 32 zu sehen. Nach der Einlassöffnung 22 ist eine dritte Außenfläche 34 des Ringraums zu sehen, die meistens fluchtend zur zweiten Außenfläche 32 angeordnet ist (durch die Verbindungslinie V angedeutet). Im Stand der Technik haben diese drei Außenflächen einen stetigen Übergang, d.h. der Ringraum ist an diesen Stellen meist zylindrisch geformt oder kegelförmig.

Solche Zapfkanäle 3 dienen dazu aus dem Hauptgaspfad 10 Fluid in den Nebengaspfad 12 zu führen. Dabei muss sichergestellt werden, dass das ausreichend Fluid mit einem ausreichenden Druck durch den Zapfkanal 3 geführt wird. Die EP 2 518 273 A2 offenabrt ein Beispiel einer Gasturbine mit Verstellschaufeln und Zapfluftkanälen. Bei der bekannten Lösung ist es nachteilig, dass die Leitschaufelblätter eine entsprechende Mindestlänge aufweisen müssen, um eine ausreichende Umlenkung der Luft durch die Verstellleitschaufel zu bewirken. Dadurch müssen die Einlassöffnungen der Zapfkanäle entsprechend weiter nach hinten angeordnet sein. Dies führt dazu, dass die Gasturbine eine große Baulänge aufweist und dadurch schwerer wird. Darüber hinaus können die Einlassöffnungen der Zapfkanäle nur für einen Betriebspunkt der Gasturbine ausgelegt sein.

Somit liegt der vorliegenden Erfindung die Aufgabe zu Grunde, die Gasturbine kürzer und leicht zu gestalten als aus dem Stand der Technik bekannt ist.

Die Aufgabe wird durch die Merkmale des Anspruchs 1 gelöst.

Die Erfindung betrifft eine Gasturbine, insbesondere eine Fluggasturbine. Diese Gasturbine umfasst mindestens ein Gehäuse, das mindestens einen Zapfkanal und mindestens eine Bohrung aufweist, und mindestens eine Verstellleitschaufel, die einen Drehzapfen, einen Drehteller und ein Leitschaufelblatt aufweist. Der Drehzapfen ist in der Bohrung angeordnet und das Leitschaufelblatt ist am Drehteller angeformt. Das an dem Drehteller angeformte Leitschaufelblatt ragt derart über diesen Drehteller, dass ein zum Zapfkanal zugewandtes, und/oder insbesondere virtuelles, Fahneneck des Leitschaufelblattes in Strömungsrichtung des Gaspfades der Gasturbine betrachtet hinter bzw. nach dem Anfang der Einlassöffnung des Zapfkanals angeordnet ist.

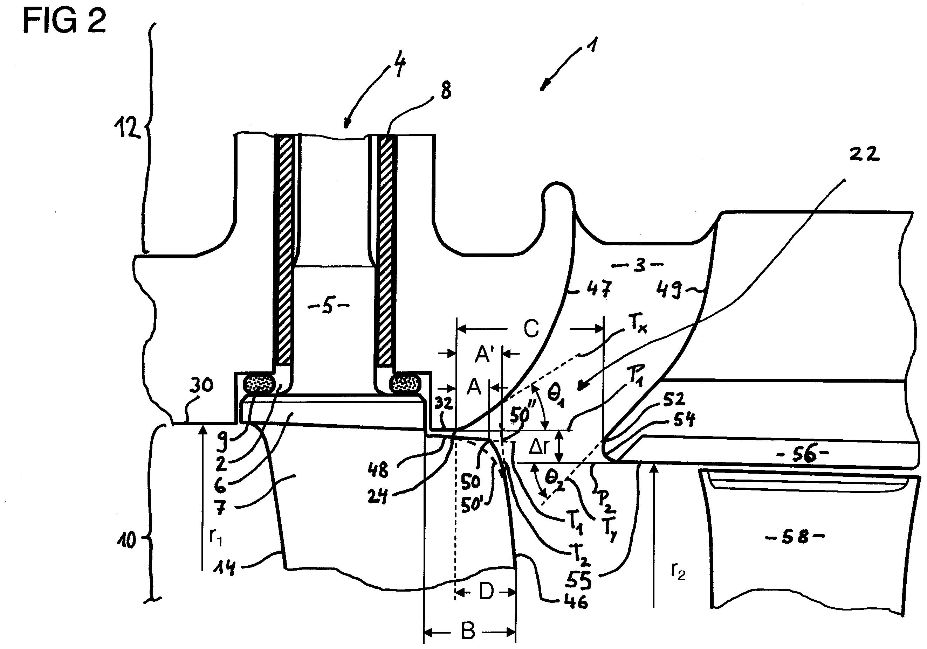

Das Fahneneck kann auch abgerundet sein. Andere Formen sind ebenfalls denkbar. Dabei kann ein sogenannte virtuelle Fahneneck nach dem Anfang der Einlassöffnung des Zapfkanals angeordnet sein. Der Schnittpunkt zwischen einer ersten Tangente, die durch die Fahne verläuft, und einer zweiten Tangente, die durch die Hinterkante des Schaufelblatts verläuft, bildet das virtuelle Fahneneck, das insbesondere zum Zapfkanal zugewandt ist. Wo sich genau das zweite radial weiter innen angeordnete, in der Figur 2 nicht abgebildete Fahneneck befindet, ist für die vorliegende Erfindung nicht von Belang. Dieses nicht abgebildete Fahneneck ist folglich vom Zapfkanal abgewandt. Damit kann die Länge der Gasturbine verkürzt werden, ohne dabei die Fahnenlänge der Verstellleitschaufeln verändern zu müssen. Durch die Verkürzung wird die Gasturbine entsprechend leichter.

In einer vorteilhaften Ausgestaltung der Erfindung ist die Bohrung in Strömungsrichtung des Gaspfades der Gasturbine betrachtet vor dem Zapfkanal angeordnet. Damit ist sichergestellt, dass die Verstellleitschaufel im Wesentlichen turbulentfrei angeströmt werden kann.

In einer weiteren vorteilhaften Ausgestaltung der Erfindung ist der erste Umfangswinkel zwischen einer Senkrechten und der Bohrung gleich mit dem zweiten Umfangswinkel zwischen der Senkrechten und der Einlassöffnung des Zapfkanals.

Betrachtet man die Gasturbine in Richtung der Hauptwelle, so verläuft diese Welle senkrecht zur Betrachtungsebene (siehe Figur 3). Dabei verläuft die in den Ansprüchen aufgeführte Senkrechte von der Außenfläche des Ringraums an der 12 Uhrposition durch die Hauptwelle der Gasturbine. Befindet sich die Bohrung in Umfangsrichtung betrachtet beispielsweise auf der 1 Uhrposition, so befindet sich die Einlassöffnung ebenso auf der 1 Uhrposition, da beide den gleichen Umfangswinkel mit dieser Senkrechten einnehmen. Dies hat den Vorteil, dass direkt hinter der Verstellleitschaufel Gas in den Nebengaspfad abgezweigt werden kann, insbesondere dann, wenn die Verstellleitschaufel den kleinsten Öffnungswinkel β einnimmt.

In einer weiteren vorteilhaften Ausgestaltung der Erfindung weist die Außenfläche des Ringraums zwischen der Bohrung und der Einlassöffnung des Zapfkanals einen anderen Radius auf als die Außenfläche des Ringraums nach der Einlassöffnung des Zapfkanals. Damit lassen sich die Druckverhältnisse im Zapfkanal optimal auslegen. Die Außenfläche des Ringraums zwischen der Bohrung und der Einlassöffnung wird im Weiteren in Kurzform als die zweite Außenfläche bezeichnet. Die Außenfläche des Ringraums nach der Einlassöffnung wird im Weiteren in Kurzform als die dritte Außenfläche bezeichnet.

In einer weiteren vorteilhaften Ausgestaltung der Erfindung weist die Außenfläche des Ringraums zwischen der Bohrung und der Einlassöffnung des Zapfkanals einen größeren Radius auf als eine nach der Einlassöffnung des Zapfkanals angeordnete Lippe. Die Lippe verlängert das Ende der Einlassöffnung radial derart, dass der Zapfkanal vorzugsweise sprunghaft radial nach innen ragt und dabei den oberen Bereich des Leitschaufelblattes in radialer Richtung überlappt. Damit kann sichergestellt werden, dass die Luft im oberen Teil des Gaspfades an der Verstellleitschaufel entlang fliest und an die Lippe in den Zapfkanal gedrückt wird, um etwas Luft aus dem Hauptgaspfad in den Nebengaspfad zu führen.

In einer weiteren vorteilhaften Ausgestaltung der Erfindung liegt ein erster axialer Abstand D zwischen dem Anfang und der Hinterkante vor. Dabei gibt B die axiale Länge der Fahne wieder, wobei das Verhältnis D/B zwischen 0,25 und 0,90, vorzugsweise zwischen 0,35 und 0,55, liegt. Damit wird angegeben welcher axiale Anteil von der Fahne unterhalb der Einlassöffnung angeordnet ist.

In einer weiteren vorteilhaften Ausgestaltung der Erfindung liegt ein erster Abstand D zwischen dem Anfang und der Hinterkante vor. Ein zweiter axialer Abstand C zwischen dem Anfang und einem Ende der Einlassöffnung liegt vor, wobei das Verhältnis D/C zwischen 0,15 und 0,45, vorzugsweise zwischen 0,25 und 0,35, liegt. Damit wird angegeben welcher axiale Anteil von der Einlassöffnung mit der Fahne abgedeckt wird.

In einer weiteren vorteilhaften Ausgestaltung der Erfindung ist die Lippe radial verschiebbar. Die Verschiebbarkeit der Lippe dient dazu den Zapfdruck an der Zapföffnung entsprechenden den Betriebspunkten der Gasturbine anzupassen zu können. Die Lippe kann beispielsweise über eine aktive Spaltregelung (allgemein als ACC - active clearance control bekannt) verschoben werden.

In einer weiteren vorteilhaften Ausgestaltung der Erfindung ist das Fahneneck des Leitschaufelblattes in Strömungsrichtung des Gaspfades der Gasturbine betrachtet nach dem Beginn der Einlassöffnung des Zapfkanals angeordnet, wenn der Öffnungswinkel β der Verstellleitschaufel zwischen 0° und 60° beträgt, insbesondere zwischen 15° und 45°. Ein weiterer vorteilhafter Bereich für den Öffnungswinkel β liegt zwischen 20° und 35°. Dies hat den Vorteil, dass die Fahne des Leitschaufelblattes nicht radial nach unten geführt werden muss, um beim Verdrehen der Verstellleitschaufel nicht am Gehäuse hängen zu bleiben. Die Fahne ragt dann in den Zapfkanal hinein und lässt sich damit aerodynamisch besser auslegen.

In einer weiteren vorteilhaften Ausgestaltung der Erfindung weist der Bereich der Fahne in der Nähe eines Drehtellers der Verstellleitschaufel einen kleineren Radius auf als das Fahneneck oder einen gleich großen Radius auf wie das Fahneneck. Damit lässt sich in vorteilhafterweise der Fahnenspalt optimieren. Der Fahnenspalt ist dabei der Abstand zwischen der zweiten Außenfläche und der Fahne. Ferner kann das Fahneneck sogar einen größeren Radius aufweisen als die zweite Außenfläche, so dass das Fahneneck in den Zapfkanal ragt.

In einer weiteren vorteilhaften Ausgestaltung der Erfindung ist die Einlassöffnung kreisförmig, quadratisch, rechteckförmig oder eine umlaufende Nut. Ferner kann der Zapfkanal zylindrisch, kegelförmig oder quaderförmig sein. Des Weiteren können die Ecken der Einlassöffnungen gerundet sein.

In einer weiteren vorteilhaften Ausgestaltung der Erfindung bilden mehrere Verstellleitschaufeln einen Leitschaufelring, wobei zwei Verstellleitschaufeln einen anderen Winkelabstand aufweisen als zwei andere Verstellleitschaufeln innerhalb des Leitschaufelrings. Eine solche Anordnung wird als cyclic spacing bezeichnet. So können beispielsweise bei einem längsgeteilten Gehäuse in der oberen Hälfte 18 Verstellleitschaufeln und in der unteren Hälfte 19 Verstellleitschaufeln angeordnet sein.

Weitere Vorteilhafte Ausgestaltung der Erfindung sind in den weiteren Unteransprüchen angegeben.

Im Weiteren werden anhand der schematischen Zeichnung bevorzugte Ausführungsbeispiele der Erfindung beschrieben. Dabei zeigen:
- Figur 1: einen Längsschnitt durch den oberen Bereich einer Gasturbine nach dem Stand der Technik,
- Figur 2: einen Längsschnitt durch den oberen Bereich einer Gasturbine nach einer erfindungsgemäßen Ausführung,
- Figur 3: einen Querschnitt durch die Gasturbine, und
- Figur 4: eine Draufsicht auf die Gasturbine entlang der Drehachse der Verstellleitschaufel

In der Figur 2 wird ein Längsschnitt durch den oberen Bereich einer Gasturbine nach einer erfindungsgemäße Ausführungsform gezeigt.

In der Beschreibungseinleitung wurde bereits auf den in Figur 1 dargestellten Stand der Technik eingegangen. Im Folgenden werden lediglich die Unterschiede hervorgehoben. Im Unterschied zum Stand der Technik kann die erfindungsgemäße Ausführungsform des Leitschaufelblattes 7 eine andere Hinterkante 46 aufweisen, so dass die erfindungsmäße Fahne 48 länger als die aus dem Stand der Technik bekannte Fahne 18 sein kann. Dabei gibt ein axialer Abstand B zwischen der Kante des Drehtellers 6 und der Hinterkante 46 des Leitschaufelblatts 7 die axiale Länge B der Fahne 48 wieder. Die erfindungsgemäße Fahne 48 und die erfindungsgemäße Hinterkante 46 treffen sich im erfindungsgemäßen Fahneneck 50. Dabei kann in einer anderen gestrichelt dargestellten Ausführungsform das Fahnenecks 50' auch abgerundet ausgeformt sein. Andere Formen sind ebenfalls denkbar. Dabei sollte das sogenannte virtuelle Fahneneck 50" nach dem Anfang 24 der Einlassöffnung 22 des Zapfkanals 3 angeordnet sein. Der Schnittpunkt zwischen einer ersten Tangente T₁, die durch die Fahne 48 verläuft, und einer zweiten Tangente T₂, die durch die Hinterkante 46 des Schaufelblatts 7 verläuft, bildet das virtuelle Fahneneck 50", das insbesondere zum Zapfkanal 3 zugewandt ist. Wo sich genau das zweite radial weiter innen angeordnete, in der Figur 2 nicht abgebildete Fahneneck befindet, ist für die vorliegende Erfindung nicht von Belang. Dabei ist anzumerken, dass sowohl das Fahneneck 50 als auch das abgerundete Fahneneck 50' das gleiche virtuelle Fahneneck 50" aufweisen.

Das erfindungsgemäße Fahneneck 50 (bzw. 50") befindet sich um einen bestimmten Abstand A (bzw. A') versetzt hinter dem Anfang 24 der Einlassöffnung 22, so dass ein Teil der Fahne 48 von der Einlassöffnung 22 überlappt wird. Dabei ist unter dem Anfang 24 der Verschneidungspunkt gemeint, der sich aus der zweiten Außenfläche 32 und der vorderen Begrenzung 47 des Zapfkanals 3 ergibt. In der Figur 2 ist ein erster axialer Abstand D eingezeichnet, der die axiale Länge zwischen dem Anfang 24 und der Hinterkante 46 wiedergibt. In der Figur 2 ist der zweite axiale Abstand C eingezeichnet, der die axiale Länge zwischen dem Anfang 24 und dem Ende 52 der Einlassöffnung 22 wiedergibt. Dabei kann die vordere Begrenzung 47 einen ersten Öffnungswinkel Θ₁ von 30° bis 60° gegenüber der Triebwerksachse 60 bzw. einer dazu parallelen Achse P₁ einnehmen. Damit ist der Winkel zwischen der Geraden P₁ und der an der vorderen Begrenzung 47 gestrichelt eingezeichnete Tangente Tₓ gemeint. Im Ausführungsbeispiel der Figur 2 beträgt der erste Öffnungswinkel Θ₁ ≈ 35°.

Eine stromabwärts angeordnete hintere Begrenzung 49 des Zapfkanals 3 mündet in das Ende 52 der Einlassöffnung 22 und kann dabei einen zweiten Öffnungswinkel Θ₂ von 30° bis 60° gegenüber der Triebwerksachse 60 bzw. einer dazu parallelen Achse P₂ einnehmen. Damit ist der Winkel Θ₂ zwischen der Geraden P₂ und der an der hinteren Begrenzung 49 gestrichelt eingezeichnete Tangente T_{y} gemeint. Im Ausführungsbeispiel der Figur 2 beträgt der zweite Öffnungswinkel Θ₂ ≈ 50°.

Es wird angemerkt, dass die Verstellleitschaufel 5 in Figur 1 für die bessere Darstellbarkeit den kleinsten Öffnungswinkel β von 0° einnimmt. Allerdings können die Verstellleitschaufeln 4 und 4' typischerweise nur einen Öffnungswinkel β von mindestens 6° einnehmen, d. h die Verstellleitschaufel ist immer etwas zur Strömung angestellt. Alternativ oder in Kombination mit dem Fahneneck 50, 50', 50" kann ein Teil der Hinterkante 46 oder die ganze Hinterkante 46 hinter bzw. nach dem Anfang 24 der Einlassöffnung 22 angeordnet sein.

Ferner ist das erfindungsgemäße Ende 52 der Einlassöffnung 22 anderes gestaltet als das Ende 26 nach dem Stand der Technik. Das erfindungsgemäße Ende 52 kann gegenüber dem bekannten Ende 26 um den Abstand Δr radial nach innen versetzt angeordnet sein und bildet dabei die Lippe 54. Nach der Lippe 54 folgt eine dritte Außenfläche 55, in der ein Abriebbelag 56 angeordnet ist. Die Außenfläche 55 ist in einem zweiten Radius r₂ zur Hauptwelle 60 angeordnet. Damit ist der Abstand Δr wie folgt definiert: Δr = r₁ - r₂. Unterhalb des Abriebbelags 56 ist eine Laufschaufel 58 zu sehen. Dabei kann die Lippe 54 radial verschiebbar sein. Typischerweise wird das Leitschaufelblatt 7 im äußeren Bereich des Ringraums in Kombination mit dem Zapfkanal 3, der Form und der radialen Lage der Lippe 54 derart ausgelegt, dass der benötigte Lieferdruck im Zapfkanal 3 sichergestellt ist.

In der Figur 3 ist ein Querschnitt durch eine Gasturbine gezeigt, wobei beispielhaft nur zwei Verstellleitschaufeln 4 und 4' und zwei Zapfkanäle 3 und 3' abgebildet sind. Das Gas wird von vorne durch die Blattebene geführt. In dieser Figur ist das Außengehäuse 1 mit der Verstellleitschaufel 4 samt Drehzapfen 5, Drehteller 6 und Leitschaufelblatt 7 dargestellt. Über den Umfang des Gehäuses 1 können selbstverständlich mehr als zwei Verstellleitschaufeln 4 und 4' angeordnet sein. Das Außengehäuse 1 hat einen ersten Radius r₁ Im inneren Bereich der Gasturbine werden die Verstelleitschaufeln 4 und 4' durch das Innengehäuse 63 eingerahmt, so dass zwischen dem Außengehäuse 1 und dem Innengehäuse 63 sich ein Leitschaufelring 59 mit hier zwei Verstellleitschaufeln 4 und 4' bildet. Durch die Hauptwelle 60 der Gasturbine ist eine vertikal verlaufende Senkrechte 62 eingezeichnet. Desweiteren sind die Drehachsen 64 und 66 der Verstellleitschaufeln 4 und 4' eingezeichnet. Die Drehachse 64 und die Senkrechte 62 bilden einen Winkel α (hier 15°). Dies entspricht bei einer Uhr die 1 Uhr Position. Im selben Winkel zur Senkrechten 62 ist der Zapfkanal 3 in Strömungsrichtung betrachtet nach bzw. hinter der Verstellleitschaufel 4 angeordnet. Dabei ist erkennbar, dass die Lippe 54 radial nach innen ragt und dabei den oberen Teil des Leitschaufelblatts 7 überdeckt. Dabei hat die Lippe 54 einen zweiten Radius r₂. Wie aus der Figur 3 zu entnehmen ist, ist der erste Radius r₁ größer als der zweiter Radius r₂. Hier wurde der Zapfkanal 3 beispielhaft rechteckförmig gestaltet.

Die Drehachse 66 der zweiten Verstellleitschaufel 4' und die Senkrechte 62 bilden hier einen Winkel von 45°. Der Winkelabstand Δα gibt den Winkel zwischen der Drehachse 64 und der Drehachse 66 an. Dieser Winkelabstand Δα beträgt hier 30°. Die Winkelabstände zwischen allen Drehachsen können gleich sein. In einer bevorzugten Ausführungsform können die Winkelabstände kontinuierlich kleiner werden. In einer anderen Ausführungsform sind die ersten Winkelabstände in einem Segment eines Leitschaufelrings 59 identisch. In einem anderen Segment sind die zweiten Winkelabstände ebenfalls identisch, jedoch unterscheiden sich die ersten Winkelabstände von den zweiten Winkelabständen. Der Leitschaufelring 59 kann in zwei, drei oder vier (auch mehr) vorzugsweise gleich große Segmente unterteilt sein.

In der Figur 4 ist eine Draufsicht auf die Gasturbine entlang der Drehachse 64 der Verstellleitschaufel 4 gezeigt. In dieser Darstellung fließt das Gas von unten nach oben. Links und rechts außen ist der hier vertikal verlaufende Hauptgaspfad 10 durch das Gehäuse 1 begrenzt. In der Mitte verläuft vertikal die Hauptwelle 60 der Gasturbine. Im oberen Bereich des Hauptgaspfades 10 ist eine - hier beispielsweise rechteckförmige - Einlassöffnung 22 zum nicht dargestellten Zapfkanal 3 erkennbar. Die untere Kante des Rechtecks bildet hierbei den Anfang 24 der Einlassöffnung 22 und die obere Kante des Rechtecks bildet das erfindungsgemäße Ende 52 der Einlassöffnung 22. Unterhalb der Einlassöffnung 22 ist die Verstellleitschaufel 4 mit einem Drehzapfen 5, einem Drehteller 6 und einem daran angeformten Leitschaufelblatt 7 erkennbar. Die erfindungsgemäße Fahne 48 ragt über den Drehteller 6 hinaus. Das erfindungsgemäße Fahneneck 50 bzw. 50" befindet sich unterhalb der Einlassöffnung 22. Das Leitschaufelblatt 7 ist um die Drehachse 64 drehbar gelagert. Dabei umschließen das Leitschaufelblatt 7 und die Hauptwelle 60 einen Öffnungswinkel β. Der Öffnungswinkel β beträgt hier in der Figur 30°. Ist dagegen das Leitschaufelblatt 7 (bzw. dessen Sehne) in dieser Darstellung auf der Hauptwelle 60 angeordnet, so weist die Verstellleitschaufel einen Öffnungswinkel β von 0° auf.

Vorzugsweise sind solche Verstellleitschaufeln 4 und die entsprechenden Zapfkanäle 3 im Hochdruckverdichter einer Gasturbine angeordnet.

### Bezugszeichenliste

- 1: Außengehäuse
- 2: Bohrung
- 3, 3': Zapfkanal
- 4, 4': Verstellleitschaufel
- 5: Drehzapfen
- 6: Drehteller
- 7: Leitschaufelblatt
- 8: Führungsbuchse
- 9: Dichtring
- 10: Hauptgaspfad
- 12: Nebengaspfad
- 14: Vorderkante
- 16: Hinterkante nach dem Stand der Technik
- 18: Fahne nach dem Stand der Technik
- 20: Fahneneck nach dem Stand der Technik
- 22: Einlassöffnung
- 24: Anfang von 22
- 30: erste Außenfläche von 1
- 32: zweite Außenfläche von 1
- 34: dritte Außenfläche nach dem Stand der Technik
- 46: erfindungsgemäße Hinterkante
- 47: vordere Begrenzung
- 48: erfindungsgemäße Fahne
- 49: hintere Begrenzung
- 50: erfindungsgemäßes Fahneneck
- 50': abgerundetes Fahneneck
- 50": virtuelles Fahneneck
- 52: erfindungsgemäße Ende von 22
- 54: Lippe
- 55: erfindungsgemäße dritte Außenfläche
- 56: Abriebbelag
- 58: Laufschaufel
- 59: Leitschaufelring
- 60: Hauptwelle der Gasturbine
- 62: Senkrechte
- 63: Innengehäuse
- 64: Drehachse von 4
- A, A': Abstand (zwischen 24 und 50 bzw. 50"
- B: axiale Länge von 48
- C: zweiter axialer Abstand (zwischen 24 und 52)
- D: erster axialer Abstand (zwischen 24 und 46)
- P_{1,2}: Achsen parallel zur Triebwerksachse
- r₁: Radius von 30
- r₂: Radius von 55
- Δr: Abstand (r₁-r₂)
- T₁: erste Tangente von 48
- T₂: zweite Tangente von 46
- V: Verbindungslinie zwischen 24 und 26
- α: Umfangswinkel
- Δα: Winkelabstand
- β: Öffnungswinkel
- Θ₁: erster Öffnungswinkel von 47
- Θ₂: zweiter Öffnungswinkel von 49

## Patentansprüche

1. Gasturbine, insbesondere eine Fluggasturbine, mit mindestens einem Gehäuse (1), das mindestens einen Zapfkanal (3) und mindestens eine Bohrung (2) aufweist, und mindestens einer Verstellleitschaufel (4), die einen Drehzapfen (5), einen Drehteller (6) und ein Leitschaufelblatt (7) aufweist, wobei der Drehzapfen (5) in der Bohrung (2) angeordnet ist und das Leitschaufelblatt (7) am Drehteller (6) angeformt ist,
**dadurch gekennzeichnet, dass**
das an dem Drehteller (6) angeformte Leitschaufelblatt (7) derart über den Drehteller (6) ragt, dass ein zum Zapfkanal (3) zugewandtes, und/oder insbesondere virtuelles, Fahneneck (50, 50") des Leitschaufelblattes (7) in Strömungsrichtung des Gaspfades der Gasturbine betrachtet nach dem Anfang (24) der Einlassöffnung (22) des Zapfkanals (3) angeordnet ist.

2. Gasturbine nach Anspruch 1, **dadurch gekennzeichnet, dass** die Bohrung (2) in Strömungsrichtung des Gaspfades der Gasturbine betrachtet vor dem Zapfkanal (3) angeordnet ist.

3. Gasturbine nach einem der vorherigen Ansprüche, **dadurch gekennzeichnet, dass** der erste Umfangswinkel (α) zwischen einer Senkrechten (62) und der Bohrung (2) gleich ist mit dem zweiten Umfangswinkel zwischen der Senkrechten (62) und der Einlassöffnung (22) des Zapfkanals (3).

4. Gasturbine nach einem der vorherigen Ansprüche, **dadurch gekennzeichnet, dass** die Außenfläche (32) des Ringraums zwischen der Bohrung (2) und der Einlassöffnung (22) des Zapfkanals (3) einen anderen Radius aufweist als die Außenfläche (55) des Ringraums nach der Einlassöffnung (22) des Zapfkanals (3).

5. Gasturbine nach einem der vorherigen Ansprüche, **dadurch gekennzeichnet, dass** die Außenfläche (32) des Ringraums zwischen der Bohrung (2) und der Einlassöffnung (22) des Zapfkanals (3) einen größeren Radius aufweist als eine nach der Einlassöffnung (22) des Zapfkanals (3) angeordnete Lippe (54).

6. Gasturbine nach mindestens einem der vorherigen Ansprüche, **dadurch gekennzeichnet, dass** ein erster axialer Abstand D zwischen dem Anfang (24) und der Hinterkante (46) vorliegt und B die axiale Länge der Fahne (48) wiedergibt, wobei das Verhältnis D/B zwischen 0,25 und 0,90, vorzugsweise zwischen 0,35 und 0,55, liegt.

7. Gasturbine nach mindestens einem der vorherigen Ansprüche, **dadurch gekennzeichnet, dass** ein erster axialer Abstand D zwischen dem Anfang (24) und der Hinterkante (46) vorliegt und ein zweiter axialer Abstand C zwischen dem Anfang (24) und einem Ende (52) der Einlassöffnung (22) vorliegt, wobei das Verhältnis D/C zwischen 0,15 und 0,45, vorzugsweise zwischen 0,25 und 0,35, liegt.

8. Gasturbine nach mindestens einem der vorherigen Ansprüche, **dadurch gekennzeichnet, dass** ein erster Radius r₁ von einer Hauptwelle (60) der Gasturbine zum Außengehäuse (1) vorliegt und ein zweiter axialer Abstand C zwischen dem Anfang (24) und dem Ende (52) der Einlassöffnung (22) vorliegt, wobei das Verhältnis r₁/C zwischen 0 und 0,6, vorzugsweise zwischen 0,2 und 0,45, liegt.

9. Gasturbine nach einem der vorherigen Ansprüche, **dadurch gekennzeichnet, dass** die Lippe (54) radial verschiebbar ist.

10. Gasturbine nach einem der vorherigen Ansprüche, **dadurch gekennzeichnet, dass** das Fahneneck (50; 50") des Leitschaufelblattes (7) in Strömungsrichtung des Gaspfades der Gasturbine betrachtet nach dem Beginn der Einlassöffnung (22) des Zapfkanals (3) angeordnet ist, wenn der Öffnungswinkel (β) der Verstellleitschaufel zwischen 0° und 60°, vorzugsweise von 15° bis 40°, beträgt.

11. Gasturbine nach mindestens einem der vorherigen Ansprüche, **dadurch gekennzeichnet, dass** der Bereich der Fahne (48) in der Nähe eines Drehtellers (6) der Verstellleitschaufel (4) einen kleineren Radius aufweist als das Fahneneck (50) oder einen gleich großen Radius aufweist wie das Fahneneck (50).

12. Gasturbine nach einem der vorherigen Ansprüche, **dadurch gekennzeichnet, dass** die Einlassöffnung (22) kreisförmig, quadratisch, rechteckförmig oder eine umlaufende Nut ist und/oder der Zapfkanal (3) zylindrisch, kegelförmig oder quaderförmig ist.

13. Gasturbine nach mindestens einem der vorherigen Ansprüche, **dadurch gekennzeichnet, dass** mehrere Verstellleitschaufeln (4) einen Leitschaufelring (59) bilden, wobei zwei Verstellleitschaufeln (4) einen anderen Winkelabstand (Δα) aufweisen als zwei andere Verstellleitschaufeln (4) innerhalb des Leitschaufelrings (59).

14. Gasturbine nach mindestens einem der vorherigen Ansprüche, **dadurch gekennzeichnet, dass** eine vordere Begrenzung (47) der Einlassöffnung (22) einen ersten Öffnungswinkel (Θ₁) gegenüber der Triebwerksachse einnimmt und/oder eine hintere Begrenzung (49) der Einlassöffnung (22) einen zweiten Öffnungswinkel (Θ₂) gegenüber der Triebwerksachse einnimmt, wobei der erste und/oder der zweite Öffnungswinkel (Θ₁, Θ₂) zwischen 30° und 60° liegen.

15. Gasturbine nach einem der vorherigen Ansprüche, **dadurch gekennzeichnet, dass** mindestens eine der Verstellleitschaufeln (4) und mindestens eine der Zapfkanäle (3) im Verdichter der Gasturbine angeordnet ist, insbesondere im Hochdruckverdichter .

## Claims

1. Gas turbine, in particular an aircraft gas turbine, comprising at least one housing (1) which has at least one dispensing channel (3) and at least one hole (2), and at least one adjustable guide vane (4) which has a pivot pin (5), a rotary plate (6) and a guide vane airfoil (7), the pivot pin (5) being arranged in the hole (2) and the guide vane airfoil (7) being integrally formed on the rotary plate (6),
**characterized in that**
the guide vane airfoil (7) integrally formed on the rotary plate (6) protrudes beyond the rotary plate (6) in such a way that a flag corner (50, 50") of the guide vane airfoil (7), which corner faces the dispensing channel (3) and/or is in particular virtual, is arranged downstream of the start (24) of the inlet opening (22) of the dispensing channel (3) as viewed in the flow direction of the gas path of the gas turbine.

2. Gas turbine according to claim 1, **characterized in that** the hole (2) is arranged upstream of the dispensing channel (3) as viewed in the flow direction of the gas path of the gas turbine.

3. Gas turbine according to either of the preceding claims, **characterized in that** the first circumferential angle (α) between a vertical line (62) and the hole (2) is equal to the second circumferential angle between the vertical line (62) and the inlet opening (22) of the dispensing channel (3).

4. Gas turbine according to any of the preceding claims, **characterized in that** the outer surface (32) of the annular space between the hole (2) and the inlet opening (22) of the dispensing channel (3) has a different radius than the outer surface (55) of the annular space downstream of the inlet opening (22) of the dispensing channel (3).

5. Gas turbine according to any of the preceding claims, **characterized in that** the outer surface (32) of the annular space between the hole (2) and the inlet opening (22) of the dispensing channel (3) has a larger radius than a lip (54) arranged downstream of the inlet opening (22) of the dispensing channel (3).

6. Gas turbine according to at least one of the preceding claims, **characterized in that** there is a first axial spacing D between the start (24) and the rear edge (46) and B represents the axial length of the flag (48), the ratio D/B being between 0.25 and 0.90, preferably between 0.35 and 0.55.

7. Gas turbine according to at least one of the preceding claims, **characterized in that** there is a first axial spacing D between the start (24) and the rear edge (46) and a second axial spacing C between the start (24) and an end (52) of the inlet opening (22), the ratio D/C being between 0.15 and 0.45, preferably between 0.25 and 0.35.

8. Gas turbine according to at least one of the preceding claims, **characterized in that** there is a first radius r₁ from a main shaft (60) of the gas turbine to the outer housing (1) and a second axial spacing C between the start (24) and the end (52) of the inlet opening (22), the ratio r₁/C being between 0 and 0.6, preferably between 0.2 and 0.45.

9. Gas turbine according to any of the preceding claims, **characterized in that** the lip (54) is radially slidable.

10. Gas turbine according to any of the preceding claims, **characterized in that** the flag corner (50; 50") of the guide vane airfoil (7) is arranged downstream of the beginning of the inlet opening (22) of the dispensing channel (3) as viewed in the flow direction of the gas path of the gas turbine when the opening angle (β) of the adjustable guide vane is between 0° and 60°, preferably from 15° to 40°.

11. Gas turbine according to at least one of the preceding claims, **characterized in that** the region of the flag (48) that is in the vicinity of a rotary plate (6) of the adjustable guide vane (4) has a smaller radius than the flag corner (50) or an equally as large radius as the flag corner (50).

12. Gas turbine according to any of the preceding claims, **characterized in that** the inlet opening (22) is circular, square, rectangular or is a circumferential groove and/or the dispensing channel (3) is cylindrical, conical or cuboidal.

13. Gas turbine according to at least one of the preceding claims, **characterized in that** a plurality of adjustable guide vanes (4) form a guide vane ring (59), two adjustable guide vanes (4) having a different angular spacing (Δα) than two other adjustable guide vanes (4) inside the guide vane ring (59).

14. Gas turbine according to at least one of the preceding claims, **characterized in that** a front delimitation (47) of the inlet opening (22) adopts a first opening angle (Θ₁) with respect to the engine axis and/or a rear delimitation (49) of the inlet opening (22) adopts a second opening angle (Θ₂) with respect to the engine axis, the first and/or the second opening angle (Θ₁, Θ₂) being between 30° and 60°.

15. Gas turbine according to any of the preceding claims, **characterized in that** at least one of the adjustable guide vanes (4) and at least one of the dispensing channels (3) is arranged in the compressor of the gas turbine, in particular in the high-pressure compressor.

## Revendications

1. Turbine à gaz, notamment une turbine à gaz d'avion, comprenant au moins une carcasse (1), qui présente au moins une conduite de distribution (3) et au moins un trou (2), et au moins une aube directrice réglable (4), qui présente un pivot (5), une table rotative (6) et une pale d'aube directrice (7), le pivot (5) étant disposé dans le trou (2) et la pale d'aube directrice (7) étant formée sur la table rotative (6),
**caractérisée en ce que**
la pale d'aube directrice (7) formée sur la table rotative (6) dépasse de la table rotative (6) de telle sorte qu'un coin de drapeau (50, 50") tourné vers la conduite de distribution (3), et/ou notamment virtuel, de la pale d'aube directrice (7), considéré dans la direction du flux de la voie du gaz de la turbine à gaz, est disposé en aval du début (24) de l'admission (22) de la conduite de distribution (3).

2. Turbine à gaz selon la revendication 1, **caractérisée en ce que** le trou (2), considéré dans la direction du flux de la voie du gaz de la turbine à gaz, est disposé en amont de la conduite de distribution (3).

3. Turbine à gaz selon l'une des revendications précédentes, **caractérisée en ce que** le premier angle circonférentiel (α) entre une perpendiculaire (62) et le trou (2) est égal au deuxième angle circonférentiel entre la perpendiculaire (62) et l'admission (22) de la conduite de distribution (3).

4. Turbine à gaz selon l'une des revendications précédentes, **caractérisée en ce que** la surface extérieure (32) de l'espace annulaire entre le trou (2) et l'admission (22) de la conduite de distribution (3) présente un rayon différent de la surface extérieure (55) de l'espace annulaire disposée en aval de l'admission (22) de la conduite de distribution (3).

5. Turbine à gaz selon l'une des revendications précédentes, **caractérisée en ce que** la surface extérieure (32) de l'espace annulaire entre le trou (2) et l'admission (22) de la conduite de distribution (3) présente un rayon plus grand qu'une lèvre (54) disposée en aval de l'admission (22) de la conduite de distribution (3).

6. Turbine à gaz selon au moins l'une des revendications précédentes, **caractérisée en ce qu'**un premier espace axial D est présent entre le début (24) et l'arête arrière (46) et que B reproduit la longueur axiale du drapeau (48), le rapport D/B se trouvant entre 0,25 et 0,90, de préférence entre 0,35 et 0,55.

7. Turbine à gaz selon au moins l'une des revendications précédentes, **caractérisée en ce qu'**un premier espace axial D est présent entre le début (24) et l'arête arrière (46) et qu'un deuxième espace axial C est présent entre le début (24) et une fin (52) de l'admission (22), le rapport D/C se trouvant entre 0,15 et 0,45, de préférence entre 0,25 et 0,35.

8. Turbine à gaz selon au moins l'une des revendications précédentes, **caractérisée en ce qu'**un premier rayon r₁ d'un arbre principal (60) de la turbine à gaz à la carcasse extérieure (1) est présent et qu'un deuxième espace axial C est présent entre le début (24) et la fin (52) de l'admission (22), le rapport r₁/C se trouvant entre 0 et 0,6, de préférence entre 0,2 et 0,45.

9. Turbine à gaz selon l'une des revendications précédentes, **caractérisée en ce que** la lèvre (54) peut être coulissée radialement.

10. Turbine à gaz selon l'une des revendications précédentes, **caractérisée en ce que** le coin de drapeau (50 ; 50") de la pale d'aube directrice (7), considéré dans la direction du flux de la voie du gaz de la turbine à gaz, est disposé en aval du début de l'admission (22) de la conduite de distribution (3) lorsque l'angle d'ouverture (β) de l'aube directrice réglable se trouve entre 0° et 60°, de préférence de 15° à 40°.

11. Turbine à gaz selon au moins l'une des revendications précédentes, **caractérisée en ce que** la zone du drapeau (48) à proximité d'une table pivotante (6) de l'aube directrice réglable (4) présente un rayon plus petit que le coin du drapeau (50) ou un rayon égal à celui du coin du drapeau (50).

12. Turbine à gaz selon l'une des revendications précédentes, **caractérisée en ce que** l'admission (22) est circulaire, carrée, rectangulaire ou une rainure circonférentielle et/ou la conduite de distribution (3) est cylindrique, conique ou parallélépipédique.

13. Turbine à gaz selon au moins l'une des revendications précédentes, **caractérisée en ce que** plusieurs aubes directrices réglables (4) forment un anneau à aubes directrices (59), deux aubes directrices réglables (4) présentant un autre espace angulaire (Δα) que deux autres aubes directrices réglables (4) dans l'anneau à aubes directrices (59).

14. Turbine à gaz selon au moins l'une des revendications précédentes, **caractérisée en ce qu'**une limite avant (47) de l'admission (22) occupe un premier angle d'ouverture (Θ₁) par rapport à l'axe du module d'entraînement et/ou qu'une limite arrière (49) de l'admission (22) occupe un deuxième angle d'ouverture (Θ₂) par rapport à l'axe du module d'entraînement, le premier et/ou le deuxième angle d'ouverture (Θ₁, Θ₂) étant entre 30° et 60°.

15. Turbine à gaz selon l'une des revendications précédentes, **caractérisée en ce qu'**au moins une des aubes directrices réglables (4) et qu'au moins une des conduites de distribution (3) sont disposées dans le compresseur de la turbine à gaz, notamment dans le compresseur haute pression.
